# EUROPEAN PATENT APPLICATION

(11) **EP 1 755 346 A1**
(43) Date of publication of application: **21.02.2007**
(21) Application number: 06253516.6
(22) Date of filing: 05.07.2006
(51) Int. Cl.: H04N 7/26, H04N 7/68

(54) **Videao encoding and decoding methods and apparatus**

(30) Priority: 07.07.2005 KR 20050061190
(71) Applicant: Samsung Electronics Co., Ltd., Suwon-si, Gyeonggi-Do (KR)
(72) Inventor: Ryu, Kwang-yuel, Suwon-si Gyeonggi-do (KR)
(74) Representative: Davies, Robert Ean

(57) **Abstract**

Video encoding and decoding methods and apparatuses are provided which are effective for error correction and error concealment in an error-prone environment. The video encoding method includes determining (S1210) an encoding operation to encode raw video among a frame encoding operation, a top/bottom field encoding operation, and a left/right field encoding operation based on at least one characteristic of the raw video; and generating (S1230) a bit stream by adaptively performing the encoding operation that is determined to encode the raw video. Further, video may be divided into frame pictures, top/bottom field pictures and left/right field pictures, and encoded accordingly. Therefore, a compression rate can be increased, and error correction and concealment can be effectively performed on a lost field by using a normally received field.

## Description

Apparatuses and methods consistent with the present invention relate to video encoding and decoding, and more particularly, to video encoding and decoding effective for error correction and error concealment in an error-prone environment.

The development of wireless Internet has rapidly increased the availability of bandwidth in a wireless environment. Accordingly, the amount of video image data that is provided in the wireless environment has consistently increased to meet the needs of users. Such an increase in the amount of video image data enhances visual quality and quality of service (QoS). However, the increased amount of image data is accompanied by various problems, such as reproduction errors or stoppage due to transmission failures and errors that may occur during wireless transmission.

In the case of MPEG encoding, when data loss occurs in the Internet, a sky wave, or a wireless communications network due to a transmission error, the data loss is not limited only to the portion or frame where the error occurred. Rather, the error may propagate such that a number of frames or portions that may be referred to by the lost portion or frame are also affected, thereby damaging or deteriorating visual quality. To restore such loss, various techniques have been suggested, including a data restoration technique on a transmission channel such as forward error correction (FEC) and automatic retransmission request (ARQ), a source coding technique such as multiple description coding and scalable video coding, and a post-processing technique such as error concealment.

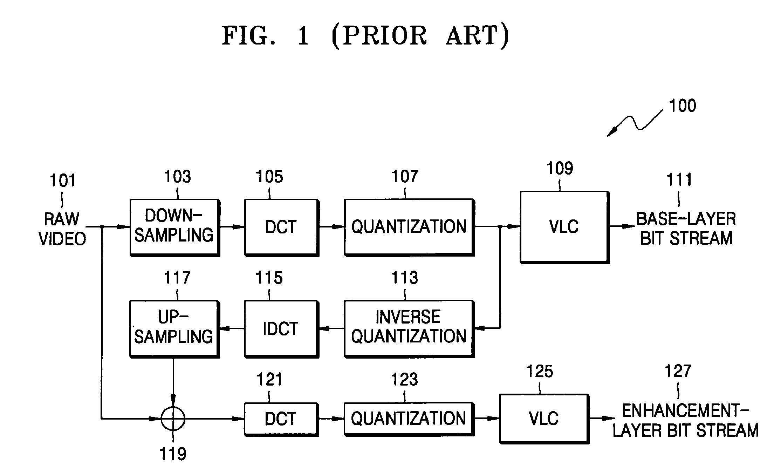

FIG. 1 is a block diagram of a conventional encoder 100 providing spatial scalability. Spatial scalability is defined as the ability to represent the same image with different spatial resolutions or sizes. The conventional encoder 100 encodes a raw video 101 using base-layer encoding or enhancement-layer encoding. In base-layer encoding, a low-resolution video is encoded, instead of an original high visual quality video. In enhancement layer encoding, a video that has been spatially up-sampled from the base layer is subtracted from the raw video 101, and a residual image is encoded.

Referring to FIG. 1, down-sampling 103, discrete cosine transform (DCT) 105, quantization 107, and variable-length-coding (VLC) 109 are performed on the raw video 101 to generate a base-layer bit stream 111. Specifically, the raw video 101 is spatially down-sampled 103, that is, reduced to 1/4 or 1/6 of its original size. Then, the DCT 105 is performed on the down-sampled raw video 101 in units of 8x8 blocks to obtain spatial redundancy from input images. In the quantization 107, the DCT transformed raw video 101 is quantized to remove a high-frequency region therefrom. After the VLC 109, such as Huffman coding, the quantized raw video 101 is transformed into the base-layer bit stream 111.

An enhancement-layer bit stream 127 is generated as follows. The raw video 101 is down-sampled, DCT transformed, and quantized. The quantized video is reconstructed by inverse quantization 113 and inverse discrete cosine transform (IDCT) 115. Then, up-sampling 117 is performed on the IDCT transformed video. The up-sampled video is subtracted from the raw video 101, and DCT 121 is performed on a residual image which is obtained after subtraction 119. The DCT transformed residual image is quantized using a quantization parameter, which is smaller than the quantization parameter used on the base layer 123. The quantized bits are coded by VLC 125 to generate the enhancement layer bit stream 127.

Although not shown, for the base-layer encoding, motion estimation is performed between the down-sampling 103 and the DCT 105, and motion compensation is performed between the IDCT 115 and the up-sampling 117. For the enhancement-layer encoding, motion estimation is performed between the subtraction 119 and the DCT 121. An encoded frame is decoded and then stored in a frame buffer (not shown) to be referred to for motion estimation.

In the case of non-scalable video encoding, the raw video 101 is transformed into a compressed bit stream after the DCT 105, the quantization 107, and the VLC 109.

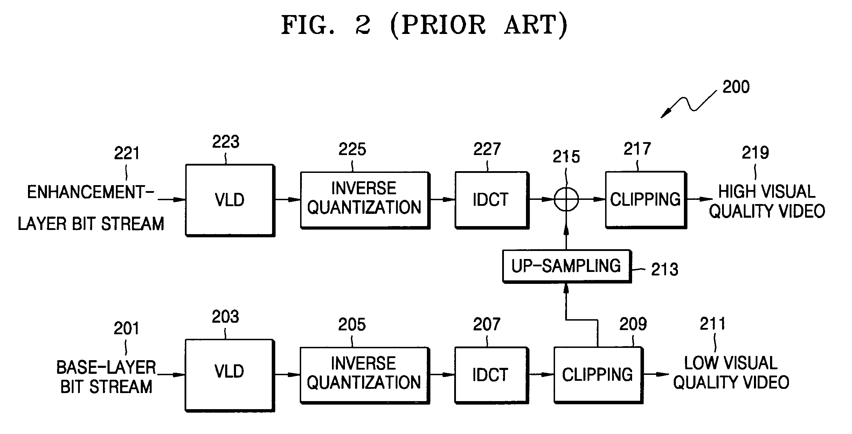

FIG. 2 is a block diagram of a conventional decoder 200 providing spatial scalability. In FIG. 2, processes for decoding a bit stream encoded by the encoder 100 of FIG. 1 are illustrated.

Referring to FIG. 2, the conventional decoder 200 performs two processes: generating a low visual quality video 211 and generating a high visual quality video 219. Specifically, the spatially scalable decoder 200 performs variable length decoding (VLD) 203, inverse quantization 205, inverse DCT 207, and clipping 209 on a base-layer bit stream 201 to generate the low visual quality video 211. Then, the spatially scalable decoder 200 combines a video obtained by up-sampling 213 the low visual quality video 211 with a video obtained by performing VLD 223, inverse quantization 225, and IDCT 227 on an enhancement-layer bit stream 221. The combined video is clipped 217, and the high visual quality video 219 is generated as a result.

The base-layer bit stream 201 is VLD transformed into 8x8 blocks in a frequency domain, and a high-frequency domain is reconstructed through the inverse quantization 205. After the IDCT 207, the video of the frequency domain is reconstructed into the video of an image domain.

The video obtained from the base layer is up-sampled to its original size before being down-sampled, and the up-sampled video is combined with a video obtained after the enhancement-layer bit stream 221 is processed in the enhancement layer. The combined video is clipped, and the high visual quality video 219 is generated as a result. Although not shown, in the base-layer decoding, motion compensation is performed between the IDCT 207 and clipping 209. Motion compensation is also performed between the IDCT 227 and addition 215.

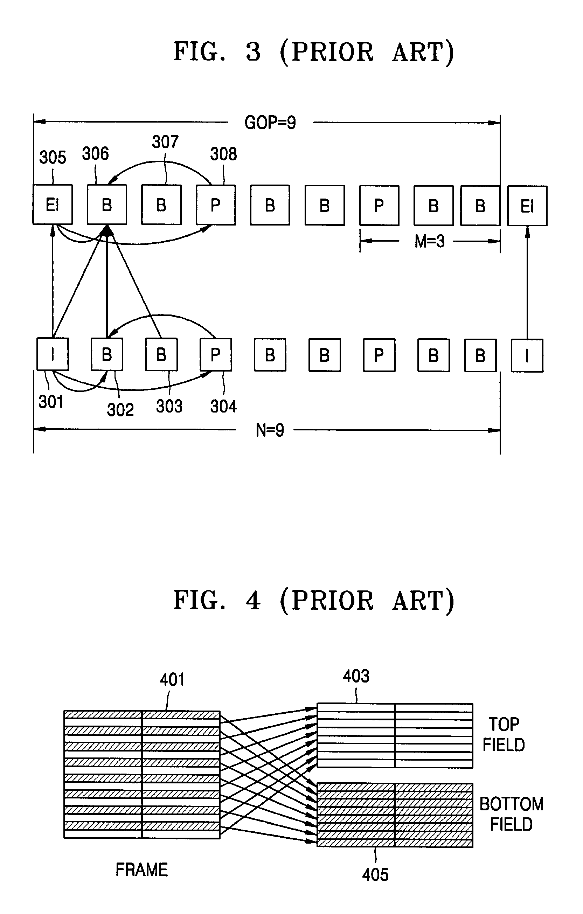

In the case of non-scalable decoding, a compressed video stream is decoded into a video after the VLD 203, the inverse quantization 205, and the IDCT 207. FIG. 3 illustrates a structure of a group of pictures (GOP) of a conventional encoder providing spatial scalability. A picture type is classified as an intra (I) frame, a predictive (P) frame, or a bi-directional (B) frame according to the type of frame referred to for prediction. The I frame can be independently decoded, but the P frame refers to an I frame or a P frame and can be decoded only when the frame to which the P frame refers is available. The B frame can also be decoded only when a frame to which the B frame refers is available. The B frame refers to two frames.

Referring to FIG. 3, the number of pictures included in the GOP is nine, and an I picture or a P picture are disposed at intervals M of three pictures. For the base layer, a P frame 304 refers to a recent I frame 301, and a B frame 302 refers to one of the I frame 301 and the P frame 304. For the enhancement layer, an EI frame 305, which is an enhancement layer intra frame, refers to the I frame 301 of the base layer, and a P frame 308 refers to the EI frame 305. A B frame 306 of the enhancement layer refers to two of the EI frame 305 and the P frame 308 in the enhancement layer and the I frame 301, the B frame 302 at the same temporal location, and a recent B frame 303.

In FIG. 3, pictures of the same type are placed at the same temporal locations of the enhancement layer and the base layer. Hence, when an error occurs in a frame referred to by the B frame, not only the B frame but also all frames which refer to the B frame are affected. For example, when the EI frame 305 has an error, the error spreads not only to the P frame 308, which refers to the EI frame, but also to the B frame 306, which likewise refers to the P frame 308. Therefore, data of the B frame 306 and the P frame 308, even when received properly, cannot be used. If an I frame is used too frequently to solve this problem, bandwidth is wasted due the increased bandwidth required for I frames compared to P frames or B frames.

In scalable coding, a base-layer frame may be used as a reference frame of the enhancement layer such that a transmission error that occurs in the enhancement layer is not spread. However, more bandwidth may be used in this case than when an enhancement-layer frame is referred to in the enhancement layer.

FIG. 4 illustrates a top/bottom field structure. In the top/bottom field structure, a frame 401 is divided into a top field 403 and a bottom field 405. Specifically, odd and even rows of the frame 401 are collected separately to form the top field 403 and the bottom field 405, respectively. In the top/bottom field structure, a picture is divided into the top and bottom fields 403 and 405. Alternatively, each of the top and bottom fields 403 and 405 may be a picture. In this case, the top and bottom fields 403 and 405 may have picture types such as I, P, and B.

If a minimum temporal difference between a reference picture and a current picture is time t1 in a frame encoding method, the minimum temporal difference may be half the time t1 in the field encoding method. Therefore, for images with a lot of motion, it is effective to use the field encoding method for motion compensation prediction encoding, which, in turn, enhances encoding efficiency.

In the MPEG-2 standard, when a bit steam having the field structure is encoded using a single scalable encoding method or a spatially scalable encoding method, each field cannot be stored or transmitted as an independent stream. In addition, field pictures derived from a frame must be successively placed and transmitted. In this regard, if errors occur, they cannot be easily corrected.

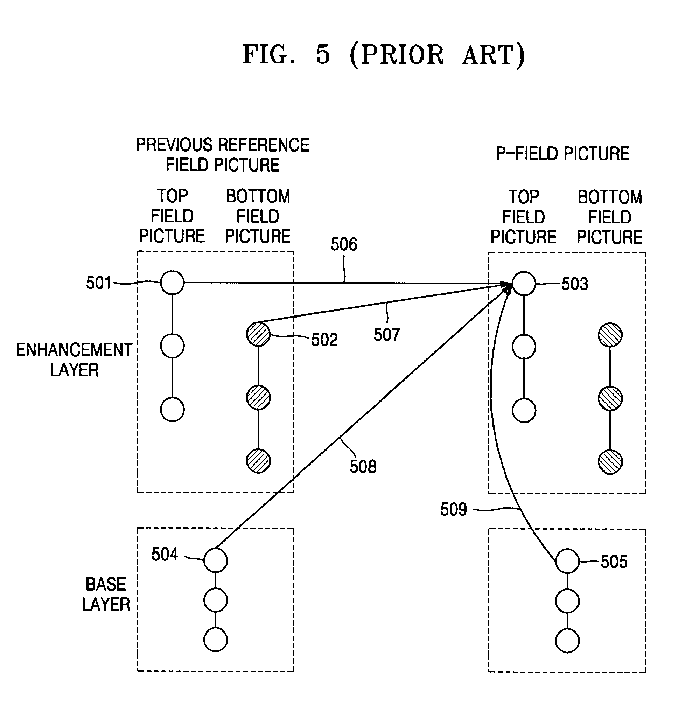

FIG. 5 illustrates reference pictures of a P field picture in an enhancement layer when the enhancement layer produced by a conventional spatially scalable encoder has the field structure. Referring to FIG. 5, a top field picture 503 of the P field picture in the enhancement layer refers to one of a top field picture 501 of a previous frame in the enhancement layer, a bottom field picture 502 of the previous frame in the enhancement layer, a frame 505 in a base layer which was encoded at the same time as the top field picture 503, and a frame 504 in the base layer which has most recently been encoded, as indicated by arrows 506 through 509, respectively.

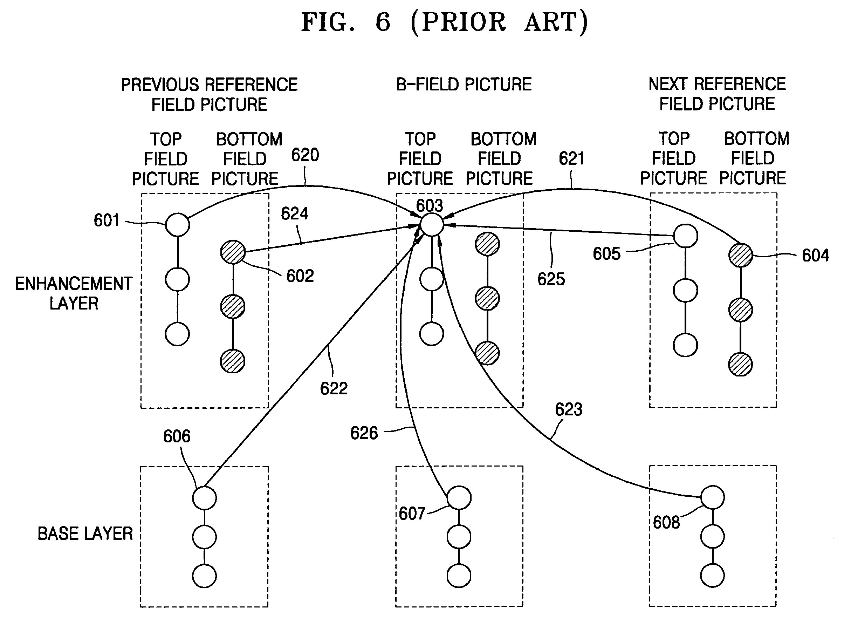

FIG. 6 illustrates reference pictures of a B field picture in an enhancement layer when the enhancement layer produced by a conventional spatially scalable encoder has the field structure. Referring to FIG. 6, a top field picture 603 of the B field picture in the enhancement layer refers to two of two top field pictures 601 and 605 in the enhancement layer, two bottom field pictures 602 and 604 in the enhancement layer, a frame 607 in a base layer which was encoded at the same time as the top field picture 603, and frames 606 and 608 in the base layer which have most recently been encoded, as indicated by arrows 620, 621, 624, 625, 626, 622 and 623, respectively.

As illustrated in FIGS. 5 and 6, if top and bottom fields are allowed to refer to each other, they are both vulnerable to error propagation.

Accordingly, a field structure which is more effective for error concealment or achieves a higher compression than a top/bottom field structure which uses an interlaced scanning method needs to be developed in consideration of a texture structure of a screen. In addition, the following problems must be overcome. When a bit stream having the field structure which is applied to video encoding is transmitted, field pictures derived from a frame must be successively transmitted, thereby making error correction difficult. Further, in the spatially scalable encoding, pictures of various types are arranged in top and bottom fields of the base layer and the enhancement layer without considering bit-rate distribution. Thus, there is a high probability of a peak bit rate, which, in turn, increases an error rate. Finally, even when only one of a top field and a bottom field has an error, since top and bottom fields are allowed to refer to each other, the error is spread to a picture in the other field which refers to the field having the error.

Embodiments of the present invention provide video encoding and decoding methods and apparatus which can increase a compression rate and are effective for error correction and error concealment by adaptively applying an encoding method according to characteristics of a video.

Embodiments of the present invention also provide video encoding and decoding methods and apparatus which are effective for error correction by improving a predictive reference method of a field structure.

Embodiments of the present invention also provide video encoding and decoding methods and apparatus which minimize an amount of data of frames affected by a loss that occurs during transmission and are effective for error concealment.

According to an aspect of the present invention, there is provided a video encoding method including: determining an encoding operation to encode raw video among a frame encoding operation, a top/bottom field encoding operation, and a left/right field encoding operation based on at least one characteristic of the raw video; and generating a bit stream by adaptively performing the encoding operation that is determined to encode the raw video.

According to another aspect of the present invention, there is provided a video encoding method including: encoding a raw video in a base layer and generating a base-layer bit stream; determining an encoding operation to encode the raw video among a frame enhancement-layer encoding operation, a top/bottom field enhancement-layer encoding operation, and a left/right field enhancement-layer encoding operation based on at least one characteristic of the raw video; and generating an enhancement-layer bit stream by adaptively performing the enhancement-layer encoding operation that is determined to encode the raw video.

According to another aspect of the present invention, there is provided a video decoding method including: determining an encoding operation of encoding a bit stream that is received; and generating a decoded video by adaptively performing one of a frame decoding operation, a top/bottom field decoding operation, and a left/right field decoding operation based on the encoding operation that is determined.

According to another aspect of the present invention, there is provided a video decoding method including: decoding a base-layer bit stream and generating a base-layer video; determining an encoding operation of encoding an enhancement-layer bit stream that is received separately from the base-layer bit stream; and generating an enhancement-layer video by adaptively performing one of a frame enhancement-layer decoding operation, a top/bottom field enhancement-layer decoding operation, and a left/right field enhancement-layer decoding method operation on the enhancement-layer bit stream that is received according to the encoding operation that is determined.

According to another aspect of the present invention, there is provided a video encoding apparatus including: an encoding operation determiner which determines an encoding operation to encode raw video among a frame encoding operation, a top/bottom field encoding operation, and a left/right field encoding operation based on at least one characteristic of the raw video; and an encoder which generates a bit stream by adaptively performing the encoding operation that is determined to encode the raw video.

According to another aspect of the present invention, there is provided a video encoding apparatus including: a base-layer encoder which encodes a raw video in a base layer and generates a base-layer bit stream; an encoding operation determiner which determines an encoding operation to encode the raw video among a frame enhancement-layer encoding operation, a top/bottom field enhancement-layer encoding operation, and a left/right field enhancement-layer encoding operation based on at least one characteristic of the raw video; and an enhancement-layer encoder which generates an enhancement-layer bit stream by adaptively performing the enhancement-layer encoding operation that is determined to encode the raw video.

According to another aspect of the present invention, there is provided a video decoding apparatus including: an encoding method determiner that determines an encoding operation of encoding a bit stream that is received; and a decoder which generates a decoded video by adaptively performing one of a frame decoding operation, a top/bottom field decoding operation, and a left/right field decoding operation according to the encoding operation that is determined.

According to another aspect of the present invention, there is provided a video decoding apparatus including: a base-layer decoder that decodes a base-layer bit stream and generates a base-layer video; an encoding method determiner that determines an encoding operation to encode an enhancement-layer bit stream that is received separately from the base-layer bit stream; and an enhancement-layer decoder that generates an enhancement-layer video by adaptively performing one of a frame enhancement-layer decoding operation, a top/bottom field enhancement-layer decoding operation, and a left/right field enhancement-layer decoding operation on the enhancement-layer bit stream according to the decoding operation that is determined.

According to a further aspect of the present invention, there is provided a computer-readable recording medium on which a program for executing a video encoding method, the video encoding method comprising: Determining an encoding operation to encode raw video among a frame encoding operation, a top/bottom field encoding operation, and a left/right field encoding operation based on at least one characteristic of the raw video; and generating a bit stream by adaptively performing the encoding operation which is determined to encode the raw video.

According to a further aspect of the present invention, there is provided a computer-readable recording medium on which a program for executing a video decoding method, a video decoding method comprising: determining an encoding operation of encoding a bit stream which is received; and generating a decoded video by adaptively performing one of a frame decoding operation, a top/bottom field decoding operation, and a left/right field decoding operation based on the encoding operation which is determined.

For a better understanding of the invention, and to show how embodiments of the same may be carried into effect, reference will now be made, by way of example, to the accompanying diagrammatic drawings in which:
FIG. 1 is a block diagram of a conventional encoder providing spatial scalability;
FIG. 2 is a block diagram of a conventional decoder providing spatial scalability;
FIG. 3 illustrates a structure of a group of pictures (GOP) of a conventional spatially scalable encoder;
FIG. 4 illustrates a top/bottom field structure;
FIG. 5 illustrates reference frames of a predictive (P) field picture in an enhancement layer when the enhancement layer produced by a conventional spatially scalable encoder has a field structure;
FIG. 6 illustrates reference frames of a bi-directional (B) field picture in an enhancement layer when the enhancement layer produced by a conventional spatially scalable encoder has the field structure;
FIG. 7 illustrates a left/right field structure according to an exemplary embodiment of the present invention;
FIG. 8 is a block diagram of a video encoder according to an exemplary embodiment of the present invention;
FIG. 9 is a block diagram of a video encoder according to another exemplary embodiment of the present invention;
FIG. 10 is a block diagram of a video decoder according to an exemplary embodiment of the present invention;
FIG. 11 is a block diagram of a video decoder according to another exemplary embodiment of the present invention;
FIG. 12 is a flowchart illustrating a video encoding method according to an exemplary embodiment of the present invention;
FIG. 13 is flowchart illustrating a video encoding method according to another exemplary embodiment of the present invention;
FIG. 14 is a flowchart illustrating a video decoding method according to an exemplary embodiment of the present invention;
FIG. 15 is a flowchart illustrating a video decoding method according another exemplary embodiment of the present invention;
FIG. 16 illustrates a structure of a GOP produced by a video encoder according to an exemplary embodiment of the present invention;
FIG. 17 illustrates a reference frame of a P field picture in an enhancement layer produced by a video encoder according to an exemplary embodiment of the present invention;
FIG. 18 illustrates a reference frame of a B field picture in an enhancement layer produced by a video encoder according to an exemplary embodiment of the present invention; and
FIGs. 19A-19C illustrate field-based error concealment according to an exemplary embodiment of the present invention.

Exemplary embodiments of the present invention will be described more fully with reference to the accompanying drawings. The invention may, however, be embodied in many different forms and should not be construed as being limited to the exemplary embodiments set forth therein; rather, these exemplary embodiments are provided so that this disclosure will be thorough and complete, and will fully convey the concepts of the invention to those skilled in the art.

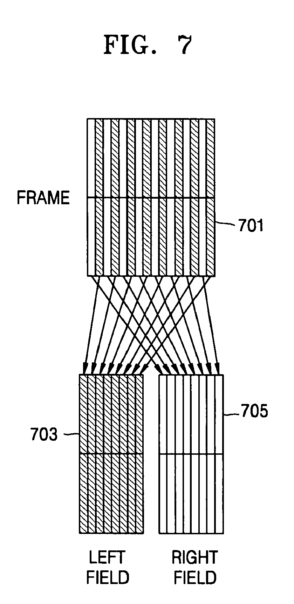

FIG. 7 illustrates a left/right field structure according to an exemplary embodiment of the present invention. In the conventional top/bottom field structure, a frame which forms a picture, is divided into a top field and a bottom field. However, in the left/right field structure according to the present exemplary embodiment, a frame 701 is divided into a left field 703 and a right field 705, and each of the left field 703 and the right field 705 forms a picture.

When an input video has more high-frequency components in a horizontal direction, the input video is divided into top and bottom fields and encoded accordingly. However, when the input video has more high-frequency components in a vertical direction, it is effective to divide the input video into left and right fields and encode the input image accordingly for error correction. Therefore, in the case of a video that has many left and right motion vectors, it is efficient to use the left/right field structure and adaptively encode the video according to the characteristics of the left/right field structure.

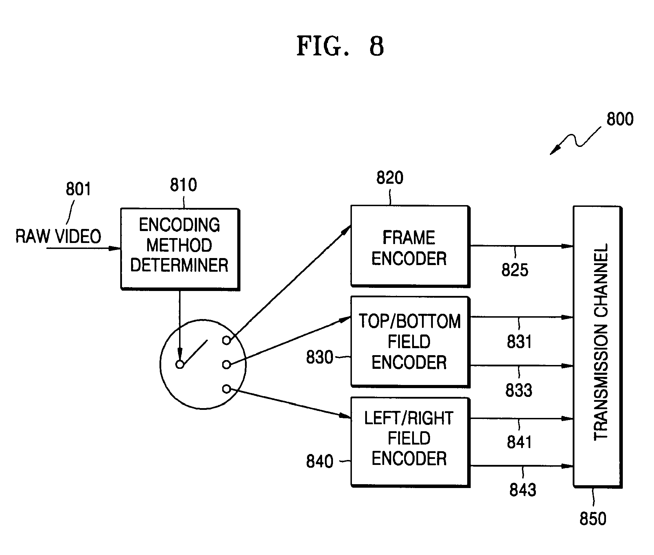

FIG. 8 is a block diagram of a video encoder 800 according to an exemplary embodiment of the present invention. Referring to FIG. 8, a raw video 801 is input to an encoding method determiner 810. The encoding method determiner 810 determines an encoding method (i.e., encoding operation) to be used for adaptive encoding based on characteristics of the raw video 801.

The video encoder 800 includes a frame encoder 820, a top/bottom field encoder 830 and a left/right field encoder 840. The video encoder 800 selects one of the frame encoder 820, the top/bottom field encoder 830 and the left/right field encoder 840 and performs adaptive encoding.

The encoding method determiner 810 may determine an encoding method in a number of ways. For instance, the encoding method determiner 810 may select an encoding method which can achieve a highest compression rate. Alternatively, the encoding method determiner 810 may determine an encoding method based on characteristics of overall motion vectors. Specifically, a frame encoding method is used when there are few motion vectors, a left/right field encoding method is used when there are a many horizontal motion vectors, and a top/bottom field encoding method is used when there are many vertical motion vectors.

To determine which method is to be used, motion vectors are measured and the measured motion vectors added. If a horizontal motion of the added motion vectors exceeds a predetermined threshold, the left/right field encoding method is used. If a vertical motion of the added motion vectors exceeds a predetermined threshold, the top/bottom field encoding method is used.

When the left/right field encoding method is used, even if there is an error in one of the left and right fields, the lost field can be more effectively restored using the other field than in the top/bottom field encoding method since there are many horizontal motion vectors. The same is true when the top/bottom field encoding method is used since there are many vertical motion vectors.

The frame encoder 820 encodes a video into a compressed bit stream through a discrete cosine transform (DCT), quantization, and variable length coding (VLC). The top/bottom field encoder 830 divides the frame 401 (see FIG. 4) into the top field 403 (see FIG. 4) composed of the odd rows of the frame 401 and the bottom field 405 (see FIG. 4) composed of the even rows of the frame 401, and encodes the top and bottom fields 403 and 405 separately. The left/right field encoder 840 divides the frame 701 (see FIG. 7) into the left field 703 (see FIG. 7) composed of odd rows of the frame 701 and the right field 705 (see FIG. 7) composed of even rows of the frame 701, and encodes the left and right fields 703 and 705 separately.

When a video is encoded using the field encoding method, two bit streams are generated. While field pictures derived from a frame are successively placed and transmitted in the conventional field encoding method, each bit stream is transmitted independently through a transmission channel in the field encoding method according to an exemplary embodiment of the present invention. Each bit stream may be independently transmitted using a different network device, or a different transmission control protocol (TCP) or user datagram protocol (UDP) port. Different priorities may be given to transmission packets of bit streams, and the bit streams may be transmitted accordingly. Since bit streams are transmitted independently through different transmission channels, error correction can be enhanced.

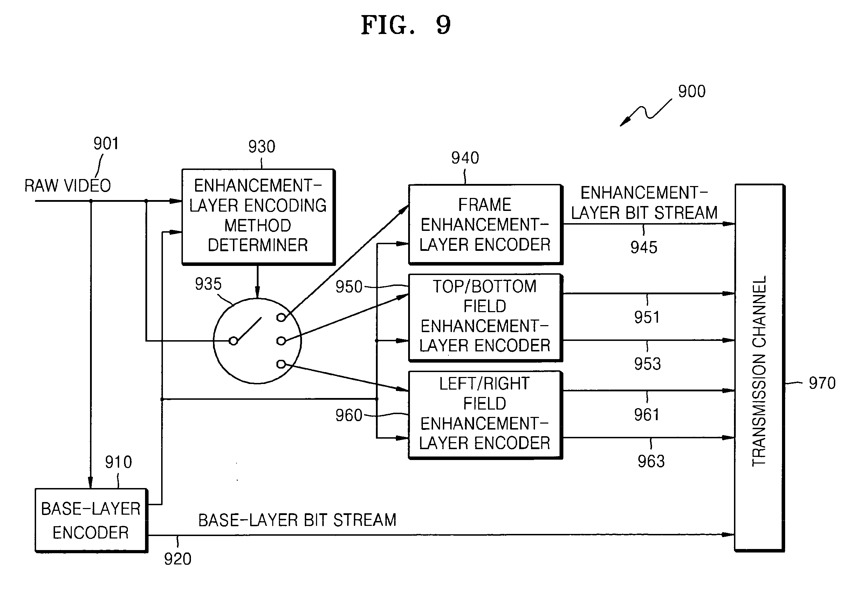

FIG. 9 is a block diagram of a video encoder 900 according to another exemplary embodiment of the present invention. The video encoder 900 is a modified version of the video encoder 800 of FIG. 8 for spatially scalable encoding. The video encoder 900 includes a base-layer encoder 920, and a frame enhancement-layer encoder 940, a top/bottom field enhancement-layer encoder 950, and a left/right field enhancement-layer encoder 960.

The video encoder 900 performs base-layer encoding and enhancement-layer encoding. For the base-layer encoding, the video encoder 900 performs operations illustrated in FIG. 1. In other words, the base-layer encoder 910 performs down-sampling, the DCT 105, the quantization 107 and the VLC 109 on a video and generates a base-layer bit stream 920.

An enhancement-layer encoding method determiner 930 determines an enhancement-layer encoding method using the methods used by the encoding method determiner 810 of FIG. 8.

The frame enhancement-layer encoder 940 performs the operations illustrated in FIG. 1 to encode a video. In other words, the enhancement-layer encoder 940 decodes data, which is obtained after the base-layer encoder 910 performed the DCT 105 and the quantization 107, by performing the inverse quantization and the IDCT 115 on the data. Then, the enhancement-layer encoder 940 up-samples the decoded data to the size of a raw video 901. The up-sampled video is subtracted from the raw video 901, and then the DCT 121, the quantization 123 and the VLC 125 are performed on a residual image which is obtained after the subtraction 119.

The top/bottom field enhancement-layer encoder 950 divides the frame 401 (see FIG. 4) into the top field 403 (see FIG. 4) composed of the odd rows of the frame 401 and the bottom field 405 (see FIG. 4) composed of the even rows of the frame 401, and encodes the top and bottom fields 403 and 405 separately. As illustrated in FIG. 7, the left/right field enhancement-layer encoder 960 divides the frame 701 into the left field 703 composed of odd rows of the frame 701 and the right field 705 composed of even rows of the frame 701, and encodes the left and right fields 703 and 705 separately. Other operations of the field enhancement-layer encoder are identical to those of the frame enhancement-layer encoder 940.

The base-layer encoder 910 generates a base-layer bit stream, whereas each of the frame enhancement-layer encoder 940, the top/bottom field enhancement-layer encoder 950, and the left/right field enhancement-layer encoder 960 generates one or two enhancement-layer bit streams. In other words, the frame enhancement-layer encoder 940 generates an enhancement-layer bit stream 945, the top/bottom field enhancement-layer encoder 950 generates bit streams 951 and 953 for top and bottom fields, respectively, and the left/right field enhancement-layer encoder 960 generates bit streams 961 and 963 for left and right fields.

The bit streams thus generated is independently transmitted through different transmission channels. As described above with reference to FIG. 8, each of the bit streams may be independently transmitted using a different transmission path, thereby enhancing error correction. The encoding method which uses the frame encoding method for the base layer and the field encoding method for the enhancement layer has been described. However, the field encoding method may also be applied to the base layer.

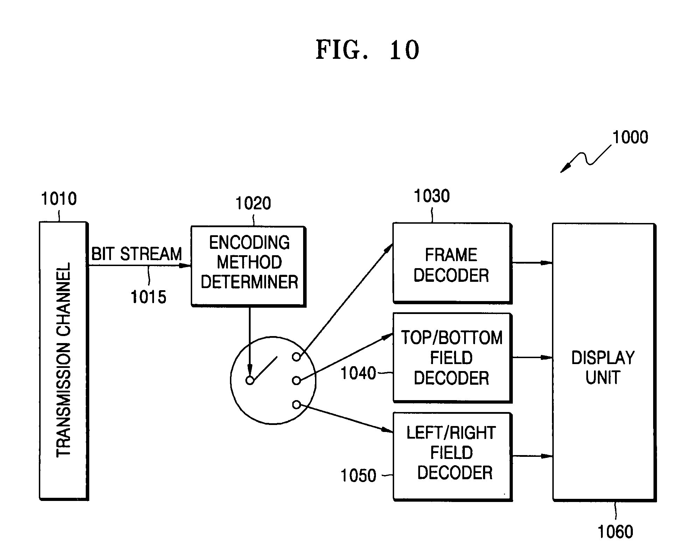

FIG. 10 is a block diagram of a video decoder 1000 according to an exemplary embodiment of the present invention. Referring to FIG. 10, a bit stream 1015 encoded by the video encoder 800 of FIG. 8 is received through a transmission channel 1010. An encoding method determiner 1020 determines an encoding method for the bit stream 1015, and the bit stream 1015 is transmitted to a corresponding decoder. The encoding method determiner 1020 may determine an encoding method by interpreting information regarding an encoding method, which is added to each bit stream transmitted, or by using other methods.

The video decoder 1000 includes a frame decoder 1030, a top/bottom field decoder 1040, and a left/right field decoder 1050. The frame decoder 1030 variable-length-decodes, inversely quantizes, and IDCT transforms a received bit stream and generates a decoded video.

The top/bottom field decoder 1040 and the left/right field decoder 1050 receive bit streams for two fields from the transmission channel 1010 via the encoding method determiner 1020. The top/bottom field decoder 1040 and the left/right field decoder 1050 variable-length-decode, inversely quantize, and IDCT transform the bit streams. Then, the top/bottom field decoder 1040 generates two field-based video, combines the two field-based video into one video, and transmits the video to a display unit 1060, which displays the video.

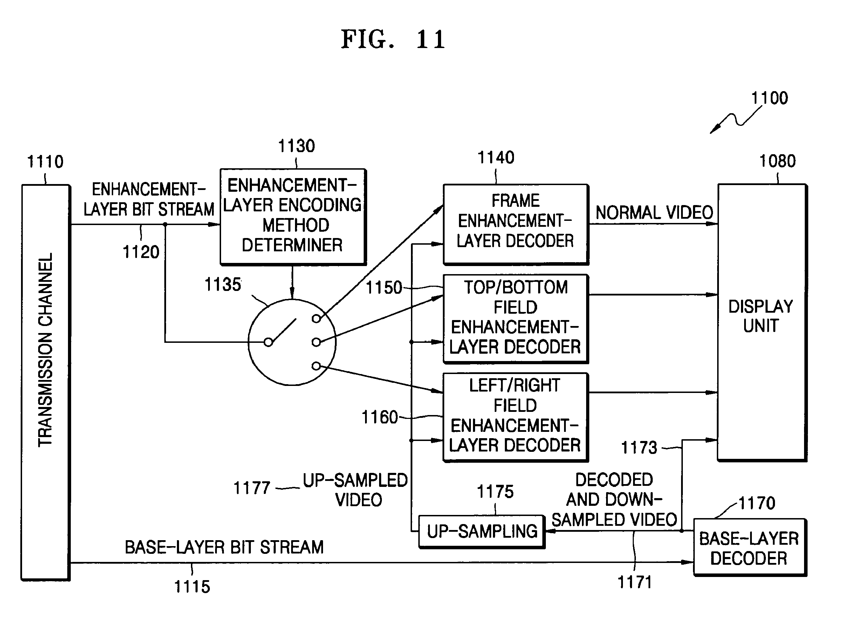

FIG. 11 is a block diagram of a video decoder 1100 according to another exemplary embodiment of the present invention. The video decoder 1100 is a modified version of the video decoder 1000 of FIG. 10 for spatially scalable decoding. The video decoder 1100 includes a base-layer decoder 1170, a frame enhancement-layer decoder 1140, a top/bottom field enhancement-layer decoder 1150, and a left/right field enhancement-layer decoder 1160.

Referring to FIG. 11, a base-layer bit stream 1115 and an enhancement-layer bit stream 1120 encoded by the video encoder 900 of FIG. 9 are separately received through a transmission channel 1110. As illustrated in FIG. 2, the base-layer decoder 1170 decodes the base-layer bit stream 1115 by performing the VLD, the inverse quantization, the IDCT and the clipping on the base-layer bit stream 1115, and generates a down-sampled video 1171. The down-sampled video 1171 may be transmitted to a display unit 1180 via a connection 1173 and displayed by the display unit 1180 if the enhancement-layer bit stream 1120 cannot be decoded as a result of the enhancement-layer bit stream 1120 being lost or damaged.

When the enhancement-layer bit stream 1120 is transmitted to an encoding method determiner 1130 separately from the base-layer bit stream 1115, the encoding method determiner 1130 determines an encoding method of the enhancement-layer bit stream 1120. The encoding method determiner 1130 may determine the encoding method by interpreting information regarding an encoding method which is added to each bit stream transmitted, or by using other methods. The enhancement-layer bit stream 1120 is transmitted to one of the frame enhancement-layer decoder 1140, the top/bottom field enhancement-layer decoder 1150 and the left/right field enhancement-layer decoder 1160 and is adaptively decoded according to the determined encoding method.

The down-sampled video 1171, which was decoded by the base-layer decoder 1170, is up-sampled 1175 to provide an up-sampled video 1177. Then, the up-sampled video 1177 is transmitted to the frame enhancement-layer decoder 1140, the top/bottom field enhancement-layer decoder 1150 and the left/right field enhancement-layer decoder 1160.

The enhancement-layer decoder 1100 includes the frame enhancement-layer decoder 1140, the top/bottom field enhancement-layer decoder 1150, and the left/right field enhancement-layer decoder 1160. As illustrated in FIG. 2, the frame enhancement-layer decoder 1140, the top/bottom field enhancement-layer decoder 1150, and the left/right field enhancement-layer decoder 1160 decode a video by performing the VLD 223, the inverse quantization 225, and the IDCT 227 on an enhancement-layer bit stream. Then, the decoded video is combined with the up-sampled video from the base layer to generate a high visual quality video. The high-visual quality video thus generated is transmitted to the display unit 1180 which displays the high-visual quality video.

The top/bottom field enhancement-layer decoder 1150 or the left/right field enhancement-layer decoder 1160 receives and decodes each of the enhancement-layer bit streams for two fields, and combines the decoded enhancement-layer bit streams into one video. This combining process is performed between performing the IDCT 227 on the enhancement-layer bit streams and combining the enhancement layer bit stream with the up-sampled video 1177 generated by the base-layer decoder 1170.

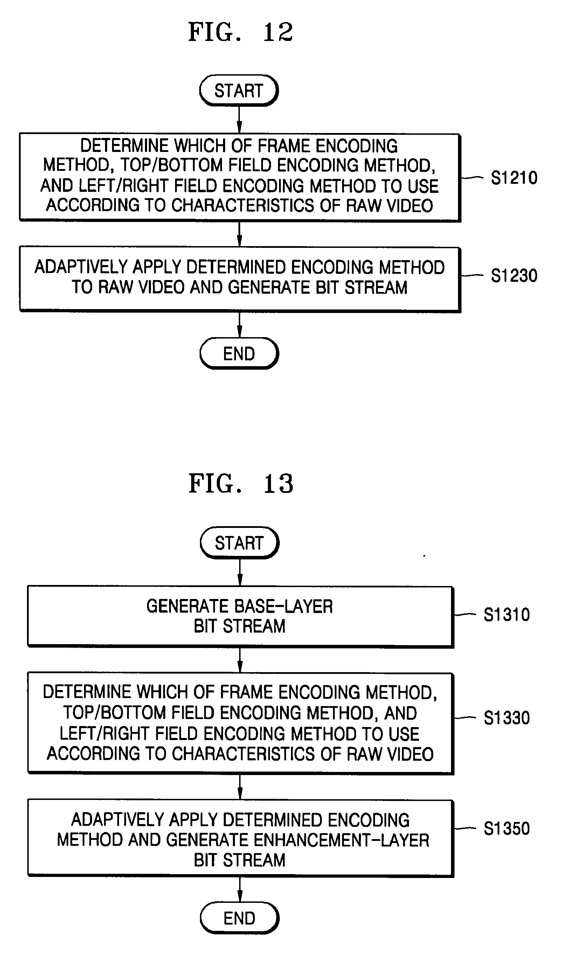

FIG. 12 is a flowchart illustrating a video encoding method according to an exemplary embodiment of the present invention. Referring to FIG. 12, which of the frame encoding method, the top/bottom field encoding method, and the left/right field encoding method to be used is determined according to characteristics of the raw video (S1210). As described above, the frame encoding method is used when there are few motion vectors, the top/bottom field encoding method is used when there are many vertical motion vectors, and the left/right field encoding method is used when there are many horizontal motion vectors. The determined encoding method is adaptively applied to a raw video, and a compressed bit stream is generated (S1230).

FIG. 13 is flowchart illustrating a video encoding method according to another exemplary embodiment of the present invention. Referring to FIG. 13, the down-sampling 103 (see FIG. 1), the DCT 105 (see FIG. 1), the quantization 107 (see FIG. 1), and the VLC 109 (see FIG. 1) are performed on a raw video to generate a base-layer bit stream (S1310). Which of the frame encoding method, the top/bottom field encoding method, and the left/right field encoding method to be used to encode the raw video is determined according to characteristics of the raw video (S1330). The determined encoding method is adaptively applied to the raw video, and an enhancement-layer bit stream is generated (S1350).

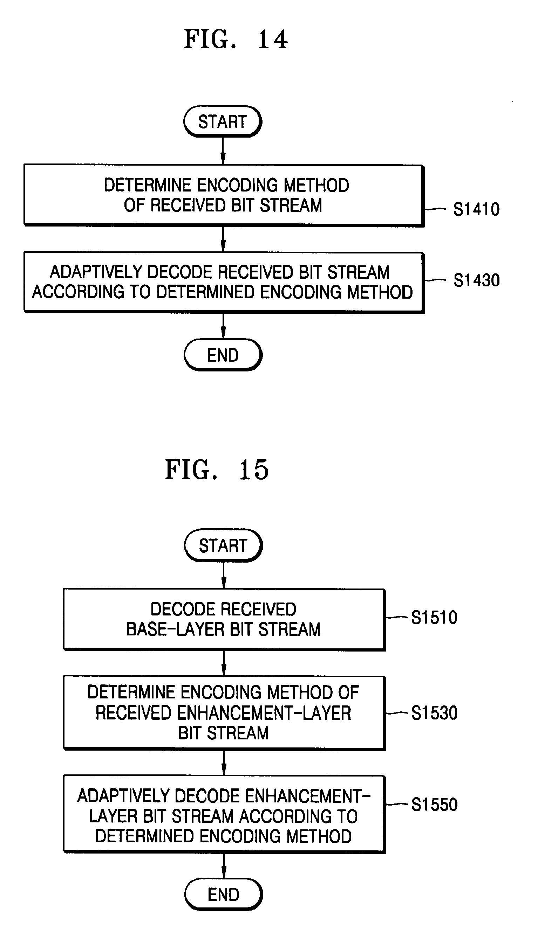

FIG. 14 is a flowchart illustrating a video decoding method according to an exemplary embodiment of the present invention. Referring to FIG. 14, an encoding method of a received bit stream is determined (S1410). The received bit stream is decoded adaptively using one of the frame enhancement-layer decoding method, the top/bottom field enhancement-layer decoding method, or the left/right field enhancement-layer decoding method in accordance with the encoding method that is determined, and a decoded video is generated (S1430).

FIG. 15 is a flowchart illustrating a video decoding method according another exemplary embodiment of the present invention. The video decoding method of FIG. 15 is a modified version of the video decoding method of FIG. 14 for spatially scalable decoding. In the video decoding method of FIG. 15, a base-layer bit stream and an enhancement-layer bit stream are received and decoded separately. As described above, the received base-layer bit stream is decoded, and a base-layer video is generated (S1510).

An encoding method of the received enhancement-layer bit stream is determined (S1530). Operation S1530 may be performed simultaneously with operation S1510 in which the base-layer bit stream is decoded. The received enhancement-layer bit stream is decoded adaptively using one of the frame enhancement-layer decoding method, the top/bottom field enhancement-layer decoding method, or the left/right field enhancement-layer decoding method according to the determined encoding method, and a decoded enhancement-layer video is generated (S1550).

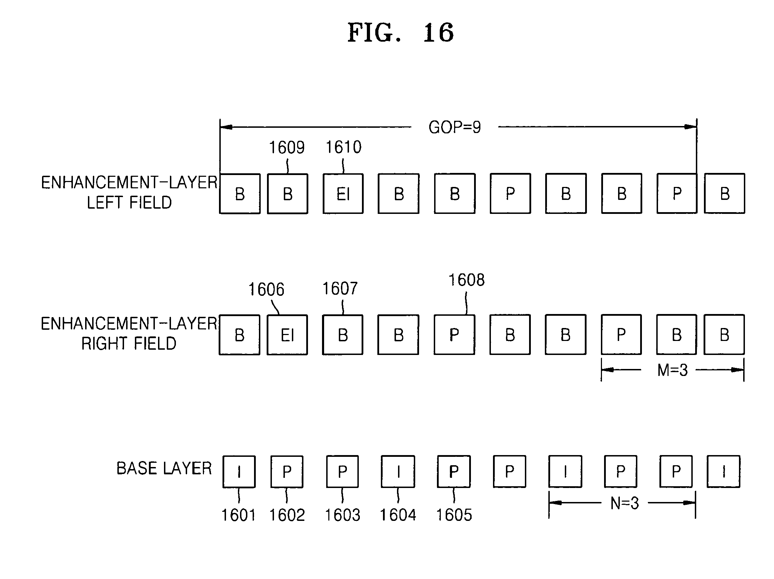

FIG. 16 illustrates a structure of a group of pictures (GOP) of a video encoder according to an exemplary embodiment of the present invention. Referring to FIG. 16, the number of pictures included in the GOP is nine. In FIG. 16, pictures used in spatially scalable encoding are illustrated. Intra (I) pictures or predictive (P) pictures are disposed at intervals M of three pictures in the enhancement layer, and I pictures are disposed at intervals N of three pictures in the base layer.

In FIG. 16, pictures of the same types are placed at different temporal locations in the enhancement layer and the base layer. For example, although an I frame 1601 of the base layer, an EI picture 1606 in a right field of the enhancement layer, and an EI picture 1610 in a left field of the enhancement layer are of an identical type, they are not placed at the same temporal location.

I frames 1601 and 1604 in the base layer may be independently encoded and decoded, and P frames 1602, 1603, and 1605 are encoded by encoding respective differences between P frames 1602, 1603, and 1605 and previous frames. When spatially scalable encoding the base layer, since the size of a screen is smaller than a raw video, only I and P frames need to be used, thereby generating a lower bit rate. Therefore, when pictures are arranged in the base layer in order of I, P, P, I, P, P, I, P, and P as illustrated in FIG. 16, a delay that occurs during a channel change operation can be reduced.

In the case of the top/bottom field encoder 950; the left/right field encoder 960 and the top/bottom field enhancement-layer decoder 1150; the left/right field enhancement-layer decoder 1160, when pictures are arranged in the enhancement layer as illustrated in FIG. 16, a bandwidth can be flattened. In other words, the I frame 1601 of the base layer and the EI pictures 1606 and 1610 in the top and bottom fields of the enhancement layer are placed at temporally different locations. Hence, data is evenly distributed over time, thereby requiring less bandwidth for transmission. Since a bit ratio of I frames : P frames : B frames is generally 8 : 3 : 2 in a video, if pictures having high bit ratios are prevented from overlapping one another, the bandwidth can be flattened out. In FIG. 16, the left/right field of the enhancement layer is illustrated. However, the same idea applies to the top/bottom field.

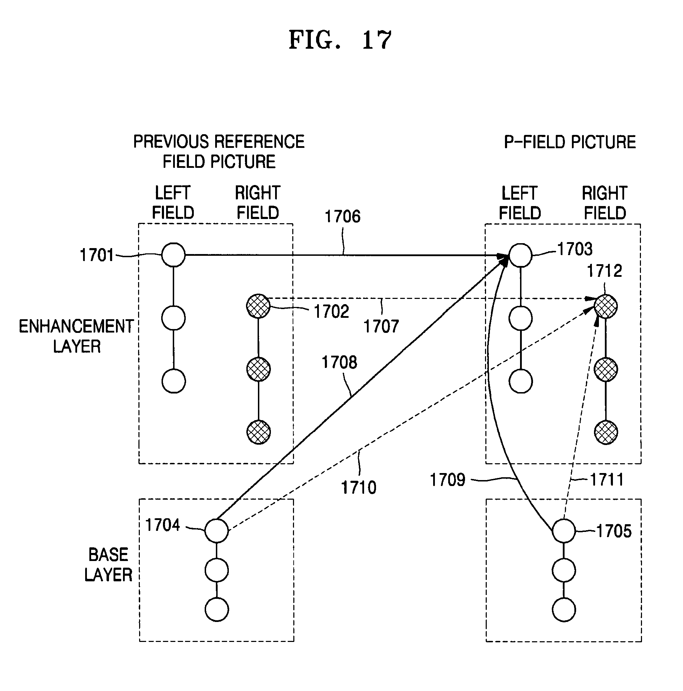

FIG. 17 illustrates a reference frame of a P field picture in the enhancement layer produced by a video encoder according to an exemplary embodiment of the present invention. In the video encoding method according to an exemplary embodiment of the present invention, a picture in a first field does not refer to a picture in a second field and vice versa to prevent an error, for example, the loss of a frame, from spreading. FIG. 17 illustrates a case where this video encoding method is applied to the spatially scalable encoding of the enhancement layer.

Referring to FIG. 17, a left field picture 1703 in the P field picture refers to pictures 1704 and 1705 in the base layer but does not refer to a right field picture 1702. Also, a right field picture 1712 in the P field picture refers to the pictures 1704 and 1705 and the right field picture 1702, but does not refer to a left field picture 1701. Therefore, for example, even when a channel for right field pictures, such as the right field picture 1702, has an error, the error does not spread to the left field.

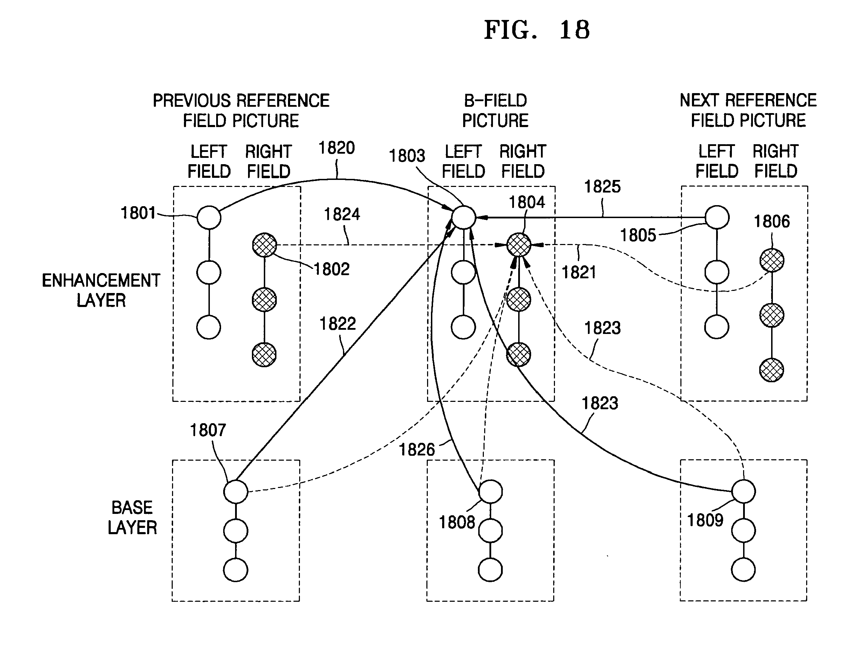

FIG. 18 illustrates a reference frame of a B field picture in the enhancement layer produced by a video encoder according to an exemplary embodiment of the present invention. Referring to FIG. 18, a left field picture 1803 in the B field picture in the enhancement layer refers to two of a frame 1808 of the base layer that is encoded and decoded at the same time as the left field picture 1803, frames 1807 and 1809 of the enhancement layer most recently been encoded and decoded, and pictures 1801 and 1805 of the enhancement layer which have most recently been encoded and decoded. However, the left field picture 1803 does not refer to right field pictures 1802 and 1806. The same concept applies to a right field picture 1804 of the B field picture in the enhancement layer.

Left and right field pictures in the B field picture also do not refer to one another to prevent the spread of an error, such as the loss of a frame. Therefore, as in the P field, right field pictures only refer to other right field pictures, and left field pictures only refer to other left field pictures. This rule applies to a case where a channel has many errors. However, the rule does not apply to a case where a channel has few errors or minor errors that a user cannot recognize or in an environment where errors can be reduced through channel error correction coding such as forward error correction (FEC). Thus, in such cases, left field and right field pictures can refer to one another. The same concept applies to the top/bottom field structure in top/bottom encoding and decoding.

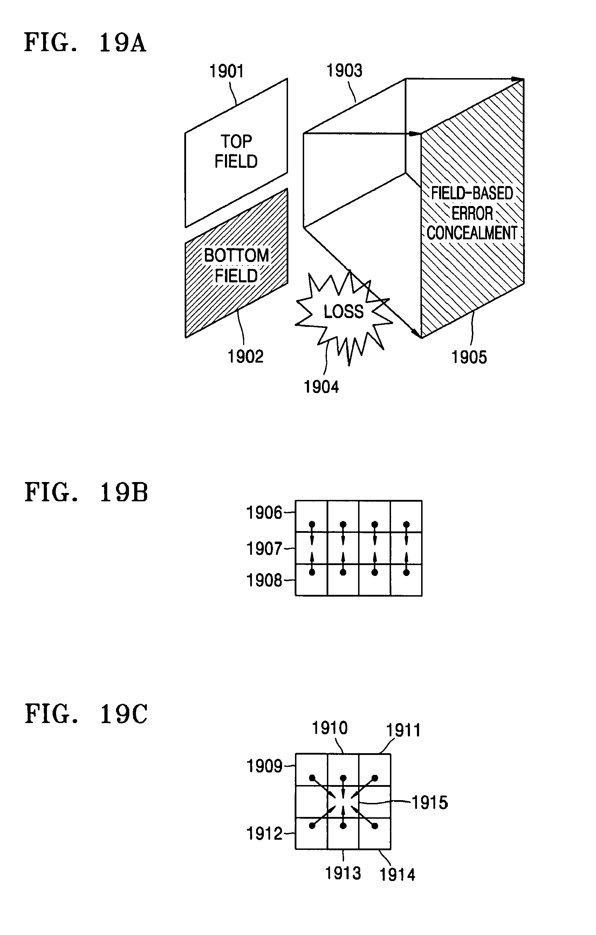

FIG. 19 illustrates field-based error concealment according to an exemplary embodiment of the present invention. Error concealment in top and bottom fields can be done using various conventional methods. Referring to FIG. 19A, when a bottom field 1902 is lost during transmission, the field-based error concealment 1905 can be performed using a top field 1901 which is received normally. Referring to FIG. 19B, a pixel 1907 of the lost bottom field 1902 is restored using an average of two pixels 1906 and 1908, which are immediately above and below the pixel 1907, of the normally received top field 1901 or using a motion vector value as a weight. Referring to FIG. 19C, a pixel 1915 of the lost bottom field 1902 is restored using an average of pixels 1910 and 1913, which are immediately above and below the pixel 1915, of the normally received top field 1901 and pixels 1909, 1911, 1912, and 1914, which are diagonal to the pixel 1915, or using a motion vector value as a weight.

As described above with reference to the exemplary embodiments of the present invention, a video may be encoded using a left/right field encoding method. Thus, when an error occurs in an image having many horizontal motion vectors, the error can be effectively corrected.

In addition, an image may be divided into frame pictures, top/bottom field pictures and left/right field pictures, and encoded accordingly. Therefore, a compression rate can be increased, and error correction and concealment can be effectively performed on a lost field using a normally received field.

Furthermore, bit rates are flattened such that errors that may occur during transmission are not concentrated in important frames such as an I frame. In a field encoding method according to an exemplary embodiment of the present invention, top and bottom fields do not refer to each other, and an enhancement-layer bit stream and a base-layer bit stream which are generated using a spatially scalable encoding method are independently transmitted. Hence, errors that may occur during transmission can be effectively corrected and concealed.

The exemplary embodiments of the present invention can also be implemented as computer-readable code on a computer-readable recording medium. The computer-readable recording medium may be any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet).

The computer-readable recording medium can also be distributed over network-coupled computer systems so that the computer-readable code is stored and executed in a distributed fashion. Also, functional programs, code, and code segments for accomplishing the present invention can be easily construed by programmers skilled in the art to which the present invention pertains.

The above description is illustrative and not restrictive. While exemplary embodiments of the present invention has been particularly shown and described, it will be understood by those of ordinary skill in the art that various changes in form and details may be made therein without departing from the spirit and scope of the present invention as defined by the following claims along with their full scope of equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video encoding method comprising:
Determining (S1210) an encoding operation to encode raw video among a frame encoding operation, a top/bottom field encoding operation, and a left/right field encoding operation based on at least one characteristic of the raw video; and
generating (S1230) a bit stream by adaptively performing the encoding operation which is determined to encode the raw video.

2. The method of claim 1, wherein, in the determining the encoding operation, the frame encoding operation is determined as the encoding operation to encode the raw video when a number of motion vectors of the raw video is below a first threshold value, the top/bottom field encoding operation is determined as the encoding operation when a number of vertical motion vectors of the raw video is above a second threshold value, and the left/right field encoding operation is determined as the encoding operation when a number of horizontal motion vectors of the raw video is above a third threshold value.

3. The method of claim 1 or 2, wherein the left/right field encoding operation comprises:
dividing an image frame (701) of the raw video to be encoded into rows;
collecting even and odd rows of the image frame which is divided separately; and
encoding the even rows of the divided image frame which are collected and the odd rows of the divided image frame which are collected into a left field (703) bit stream and a right field (705) bit stream, respectively.

4. The method of any of claims 1-3, wherein, in the top/bottom field encoding operation, the raw video is encoded such that a top field predictive picture does not refer to a bottom field picture, and a bottom field predictive picture does not refer to a top field picture.

5. The method of any preceding claim, wherein, in the left/right field encoding operation, the raw video is encoded such that a left field predictive picture does not refer to a right field picture, and a right field predictive picture does not refer to a left field picture.

6. The method of any preceding claim, wherein two bit streams are generated when the left/right field encoding operation or the top/bottom encoding operation is performed and the two bits streams which are generated are transmitted independently.

7. A video encoding method comprising:
encoding a raw video in a base layer and generating (S1310) a base-layer bit stream;
determining (S1330) an encoding operation to encode the raw video among a frame enhancement-layer encoding operation, a top/bottom field enhancement-layer encoding operation, and a left/right field enhancement-layer encoding operation based on at least one characteristic of the raw video; and
generating (S1350) an enhancement-layer bit stream by adaptively performing the enhancement-layer encoding operation which is determined to encode the raw video.

8. The method of claim 7, wherein the generating the base-layer bit stream comprises:
down-sampling the raw video; and
performing discrete-cosine-transforming (DCT), quantization, and variable-length-coding (VLC) on the raw video which is down-sampled.

9. The method of claim 7 or 8, wherein the generating the enhancement-layer bit stream comprises:
performing down-sampling, discrete-cosine-transforming (DCT), and quantization on the raw video;
performing inverse quantization, inverse DCT (IDCT), and up-sampling on the video which is quantized;
subtracting the video which is up-sampled from the raw video; and
performing DCT, quantization, and variable-length-coding (VLC) on a residual image obtained from the subtraction of the video which is up-sampled from the raw video.

10. The method of any of claims 7-9, further comprising transmitting the base-layer bit stream and the enhancement-layer bit stream independently.

11. The method of any of claims 7-10, wherein a first field picture and a second field picture, which are generated in the enhancement layer encoding operation, and a picture in the base layer which has an identical picture type as the first field picture and the second field picture are placed at different temporal positions, respectively, and pictures of the base layer include intra and predictive pictures.

12. The method of any of claims 7-11, wherein, in the top/bottom field encoding operation, the raw video is encoded such that a top field predictive picture does not refer to a bottom field picture, and a bottom field predictive picture does not refer to a top field picture.

13. The method of any of claims 7-12, wherein, in the left/right field encoding operation, the raw video is encoded such that a left field predictive picture does not refer to a right field picture, and a right field predictive picture does not refer to a left field picture.

14. A video decoding method comprising:
determining (S1410) an encoding operation of encoding a bit stream which is received; and
generating (S1430) a decoded video by adaptively performing one of a frame decoding operation, a top/bottom field decoding operation, and a left/right field decoding operation based on the encoding operation which is determined.

15. The method of claim 14, wherein, in the determining the encoding operation, information added to the bit stream which is received is interpreted to determine which decoding operation is performed.

16. The method of claim 14 or 15, further comprising, when one of two fields is lost due to an error in a bit stream which is encoded by a field encoding operation, correcting the error by using the other of the two fields.

17. The method of any of claims 14-16, further comprising, when one of the two fields is lost due to an error in the bit stream encoded by a field encoding operation, concealing the error by using the other of the two fields.

18. A video decoding method comprising:
decoding (S1510) a base-layer bit stream and generating a base-layer video;
determining (S1530) an encoding operation of encoding an enhancement-layer bit stream which is received separately from the base-layer bit stream; and
generating (S1550) an enhancement-layer video by adaptively performing one of a frame enhancement-layer decoding operation, a top/bottom field enhancement-layer decoding operation, and a left/right field enhancement-layer decoding operation on the enhancement-layer bit stream which is received according to the encoding operation which is determined.

19. The method of claim 18, wherein, the decoding of the base-layer bit stream comprises performing variable-length-decoding (VLD), inverse quantization, inverse discrete-cosine-transforming (IDCT), and clipping on the base-layer bit stream.

20. The method of claim 18 or 19, wherein, if the enhancement-layer bit stream was encoded using a left/right field enhancement-layer encoding operation, the generation of the enhancement-layer video further comprises:
performing variable-length-decoding (VLD), inverse quantization, and inverse discrete-cosine-transforming (IDCT) respectively on an enhancement-layer bit stream of a left field and an enhancement-layer bit stream of a right field, wherein the enhancement-layer bit stream of the left field and the enhancement-layer bit stream of the right field are received separately;
combining the enhancement-layer bit streams of the left and right fields which are IDCT transformed; and
combining a video which is obtained by combining the enhancement-layer bit stream of the left field and the enhancement-layer bit stream of the right field with a video which is obtained by up-sampling the base-layer video which is generated.

21. The method of any of claims 18-20, further comprising, when one of two fields is lost due to an error in a bit stream which is encoded by a field enhancement-layer encoding operation, concealing the error by using the other of the two fields.

22. The method of any of claims 18-21, further comprising displaying the enhancement-layer video, wherein the base-layer video is displayed without the enhancement-layer video when the enhancement-layer bit stream cannot be decoded due to loss or damage of the enhancement-layer bit stream.

23. A video encoding apparatus (800) comprising:
an encoding operation determiner (810) which is operable to determine an encoding operation to encode raw video (801) among a frame encoding (820) operation, a top/bottom field encoding (830) operation, and a left/right field encoding (840) operation based on at least one characteristic of the raw video; and
an encoder (820, 830, 840) which is operable to generate a bit stream by adaptively performing the encoding operation which is determined to encode the raw video.

24. The encoding apparatus of claim 23, wherein the encoding operation determiner is operable to determine that the frame encoding operation is determined as the encoding operation to encode the raw video when a number of motion vectors of the raw video is below a first threshold value, the top/bottom field encoding operation is determined as the encoding operation to be used to encode the raw video when a number of vertical motion vectors of the raw video is above a second threshold value, and the left/right field encoding operation is determined as the encoding operation to be used to encode the raw video when a number of horizontal motion vectors of the raw video is above a third threshold value.

25. The encoding apparatus of claim 23 or 24, further comprising:
a frame encoder (820) which is operable to encode the raw video by performing the frame encoding operation;
a top/bottom field encoder (830) which is operable to encode the raw video by performing the top/bottom field encoding operation; and
a left/right field encoder (840) which is operable to encode the raw video by performing the left/right field encoding operation.

26. The encoding apparatus of claim 25, wherein the left/right field encoder (840) is operable to divide an image frame of the raw video (801) to be encoded into rows, collect even and odd rows of the image frame which is divided separately, encode the even rows of the divided image frame which are collected and the odd rows of the divided image frame which are collected, and generate a left field bit stream and a right field bit stream, respectively from the even rows and odd rows which are encoded.

27. The encoding apparatus of any of claims 23-26, wherein in the top/bottom field encoding operation, the raw video is encoded such that a top field predictive picture does not refer to a bottom field picture, and a bottom field predictive picture does not refer to a top field picture

28. The encoding apparatus of any of claims 23-27, wherein, in the left/right field encoding operation, the raw video is encoded such that a left field predictive picture does not refer to a right field picture, and a right field predictive picture does not refer to a left field picture.

29. The encoding apparatus of any of claims 23-28, wherein two bit streams are generated when the left/right field encoding operation or the top/bottom encoding operation is performed and the two bits streams which are generated are transmitted independently.

30. A video encoding apparatus (900) comprising:
a base-layer encoder (910) which is operable to encode a raw video (901) in a base layer and generate a base-layer bit stream (920);
an encoding operation determiner (930) which is operable to determine an encoding operation to encode the raw video among a frame enhancement-layer encoding (940) operation, a top/bottom field enhancement-layer (950) encoding operation, and a left/right field enhancement-layer (960) encoding operation based on at least one characteristic of the raw video; and
an enhancement-layer encoder (940, 950, 960) which is operable to generate an enhancement-layer bit stream by adaptively performing the enhancement-layer encoding operation which is determined to encode the raw video.

31. The encoding apparatus of claim 30, wherein the enhancement-layer encoder (940, 950, 960) comprises:
a frame enhancement-layer encoder (940) which is operable to encode the raw video by performing the frame enhancement-layer encoding operation;
a top/bottom field enhancement-layer encoder (950) which is operable to encode the raw video by performing the top/bottom field enhancement-layer encoding operation; and
a left/right field enhancement-layer encoder (960) which is operable to encode the raw video by performing the left/right field enhancement-layer encoding operation.

32. The encoding apparatus of claim 30 or 31, wherein the base-layer bit stream (920) and the enhancement-layer bit stream (945) are transmitted independently.

33. The encoding apparatus of any of claims 30-32, wherein a first field picture and a second field picture, which are generated in the enhancement layer encoding operation, and a picture in the base layer which has an identical picture type as the first field picture and the second field picture are placed at different temporal positions, respectively, and pictures of the base layer include intra and predictive pictures.

34. The encoding apparatus of claim 32 or 33, wherein the top/bottom field encoder (950) is operable to encode the raw video such that a top field predictive picture does not refer to a bottom field picture, and a bottom field predictive picture does not refer to a top field picture.

35. The encoding apparatus of any of claims 32-34, wherein the left/right field encoder (960) is operable to encode the raw video such that a left field predictive picture does not refer to a right field picture, and a right field predictive picture does not refer to a left field picture.

36. A video decoding apparatus (1000) comprising:
an encoding method determiner (1020) which is operable to determine an encoding operation of encoding a bit stream (1015) which is received; and
a decoder (1030, 1040, 1050) which is operable to generate a decoded video by adaptively performing one of a frame decoding (1040) operation, a top/bottom field decoding (1050) operation, and a left/right field decoding operation according to the encoding operation which is determined.

37. The decoding apparatus of claim 36, wherein the encoding operation determiner (1020) is operable to interpret information added to the bitstream which is received to determine which decoding operation is performed.

38. The decoding apparatus of claim 36 or 37, further comprising:
a frame decoder (1030) which is operable to decode the bit stream by performing the frame decoding operation;
a top/bottom field decoder (1040) which is operable to decode the bit stream by performing the top/bottom field decoding operation; and
a left/right field decoder (1050) which is operable to decode the bit stream by performing the left/right field decoding operation.

39. The decoding apparatus of any of claims 36-38, wherein, when one of two fields is lost due to an error in a bit stream which is encoded by a field encoding operation, the error is corrected by using the other of the two fields.

40. The decoding apparatus of any of claims 36-39, wherein, when one of the two fields is lost due to an error in the bit stream encoded by a field encoding operation, the error is concealed by using the other of the two fields.

41. A video decoding apparatus (1100) comprising:
a base-layer decoder (1170) which is operable to decode a base-layer bit stream (1115) and generate a base-layer video (1173);
an encoding method determiner (1130) which is operable to determine an encoding operation to encode an enhancement-layer bit stream (1120) which is received separately from the base-layer bit stream (1115); and
an enhancement-layer decoder (1140, 1150, 1160) which is operable to generate an enhancement-layer video by adaptively performing one of a frame enhancement-layer decoding (1140) operation, a top/bottom field enhancement-layer decoding (1160) operation, and a left/right field enhancement-layer decoding operation on the enhancement-layer bit stream (1120) according to the decoding operation that is determined.

42. The decoding apparatus of claim 41, wherein, the base-layer decoder (1140, 1150, 1160) is operable to perform variable length decoding (VLD), inverse quantization, inverse discrete-cosine-transforming (IDCT), and clipping on the base-layer bit stream and generates the base-layer video.

43. The decoding apparatus of claim 41 or 42, wherein the enhancement-layer decoder comprises:
a frame enhancement-layer decoder (1140) which is operable to decode the enhancement bit stream by performing the frame enhancement-layer decoding operation;
a top/bottom field enhancement-layer decoder (1150) which is operable to decode the enhancement-layer bit stream by performing the top/bottom field enhancement-layer decoding operation; and
a left/right field enhancement-layer decoder (1160) which is operable to decode the enhancement-layer bit stream using the left/right field enhancement-layer decoding operation.

44. The decoding apparatus of any of claims 41-43, wherein, if the enhancement-layer bit stream was encoded using a left/right field enhancement-layer encoding method, the enhancement-layer decoder performs variable length decoding (VLD), inverse quantization, and inverse discrete-cosine-transforming (IDCT) on an enhancement-layer bit stream of a left field and an enhancement-layer bit stream of a right field, wherein the enhancement-layer bit stream of the left field and the enhancement-layer bit stream of the right field are received separately, combines the enhancement-layer bit streams of the left and right fields that are IDCT transformed, and combines a video which is obtained after combining the enhancement-layer bit stream of the left field and the enhancement-layer bit stream of the right field with a video which is obtained after up-sampling the base-layer video which is generated.

45. The decoding apparatus of any of claims 41-44, wherein, when one of two fields is lost due to an error in a bit stream which is encoded by a field enhancement-layer encoding operation, the error is concealed by using the other of the two fields.

46. The decoding apparatus of any of claims 41-45, wherein the enhancement-layer video is displayed, and the base-layer video is displayed without the enhancement layer video when the enhancement-layer bit stream cannot be decoded due to loss or damage of the enhancement-layer bit stream.

47. A computer-readable recording medium on which a program for executing a video encoding method, the video encoding method comprising:
Determining (S1210) an encoding operation to encode raw video among a frame encoding operation, a top/bottom field encoding operation, and a left/right field encoding operation based on at least one characteristic of the raw video; and
generating (S1230) a bit stream by adaptively performing the encoding operation which is determined to encode the raw video.

48. A computer-readable recording medium on which a program for executing a video decoding method, a video decoding method comprising:
determining (S1410) an encoding operation of encoding a bit stream which is received; and
generating (S1430) a decoded video by adaptively performing one of a frame decoding operation, a top/bottom field decoding operation, and a left/right field decoding operation based on the encoding operation which is determined.
